# NOUVEAU FASCICULE DE BREVET EUROPEEN

(11) **EP 0 104 097 B2**
(45) Date de publication et mention de la décision concernant l'opposition: **19.07.1995**
(45) Mention de la délivrance du brevet: 29.07.1987
(21) Numéro de dépôt: 83401089.4
(22) Date de dépôt: 31.05.1983
(51) Int. Cl.: C08J 5/18, C08L 23/08

(54) **Compositions de polyéthylène de basse densité et de copolymères éthylène/alpha-oléfine et leur application à la fabrication de films**
Zusammensetzungen von Polyäthylen niedriger Dichte und Äthylen/alpha-Olefin-Copolymere und deren Anwendung zur Herstellung von Folien
Composition of low-density polyethylene/alpha-olefin copolymers and their application to the manufacture of films

(30) Priorité: 03.06.1982 FR 8209634
(43) Date de publication de la demande: 28.03.1984
(73) Titulaire: ECP ENICHEM POLYMERES FRANCE, 92411 Courbevoie (FR)
(72) Inventeur: Hert, Marius, F-62690 Aubigny en Artois (FR)

(56) Documents cités:
- EP-A- 6 110
- EP-A- 21 605
- EP-A- 89 388
- EP-A- 102 854
- EP-A- 0 043 743
- EP-A- 0 052 889
- EP-A- 0 070 220
- DE-A- 2 254 440
- DE-A- 3 113 589
- FR-A- 2 472 581
- FR-A- 2 481 709
- GB-A- 1 035 887
- GB-A- 2 066 271
- GB-A- 2 077 273
- JP-A-52 086 440
- JP-A-53 125 452
- US-A- 3 176 052
- US-A- 3 645 992
- US-A- 4 076 698
- US-A- 4 243 619
- Kunststoff Handbuch, Vol. IV-1969 Polyolefine, Carl Hanser Verlag P. 53, 55; 127-130, 195, 204 205
- Journal of Polym. Science, Vol. 20, 1982, p.441-445

## Description

La présente invention a pour objet des compositions de polyéthylène radicalaire et de copolymères éthylène/α-oléfine et leurs applications à la fabrication de films, au gainage de câbles téléphoniques et à la fabrication de housses rétractables.

EP-A-0 052 889 décrit l'application à un substrat, à une température d'au moins 232°C, d'un revêtement d'épaisseur inférieure à 12,5 »m constitué d'une composition comprenant de 20 à 98 % en poids d'un polyéthylène à haute pression ayant une densité inférieure à 0,93 et un indice de fluidité de 4 à 6,3 dg/min, et de 2 à 80 % en poids d'au moins un copolymère d'éthylène et d'une α-oléfine ayant de 3 à 8 atomes de carbone, ledit copolymère ayant un indice de fluidité compris entre 0,5 et 100 dg/min, un indice de polydispersité (défini par le rapport Mw/Mn de la masse moléculaire moyenne en poids à la masse moléculaire moyenne en nombre) compris entre 2,7 et 4,1, un taux d'insaturation global compris entre 0,1 et 0,3 double liaison pour 1000 atomes de carbone et une densité comprise entre 0,912 et 0,940.

De même FR-A-2.481.709 décrit le mélange de (a) 30 à 80 % en poids d'un copolymère d'éthylène et d'une α-oléfine ayant de 3 à 12 atomes de carbone, le dit copolymère ayant une densité inférieure à 0,945 et une viscosité intrinsèque à 135°C de 1,7 à 10 dl/g, et de (b) 20 à 70 % en poids d'un polyéthylène haute pression ayant une densité de 0,915 à 0,935 et une viscosité intrinsèque à 135°C inférieure à 1,3 dl/g. Il convient de noter que, pour un tel copolymère d'éthylène et d'α-oléfine, une viscosité intrinsèque à 135°C supérieure à 1,7 dl/g correspond à un indice de fluidité (selon la norme ASTM D 1238-73) inférieur à 0,3 dg/min.

Enfin US-A-3.176.052 décrit un mélange homogène comprenant (a) de 5 à 75 % en poids de polyéthylène radicalaire ayant une densité de 0,91 à 0,94 et (b) de 25 à 95 % en poids d'un copolymère éthylène/α-oléfine ayant une densité supérieure à 0,92 et un indice de fluidité de 0,1 à 10 dg/min. Ce document enseigne que l'amélioration de la brillance d'un film extrudé obtenu à partir d'un tel mélange, par rapport aux films extrudés obtenus à partir de chaque constituant du mélange est d'autant plus marquée que le polyéthylène radioalaire a un indice de fluidité plus élevé (3 à 10 dg/min selon les exemples) et que le copolymère éthylène/α-oléfine a un indice de fluidité plus faible que le polyéthylène radicalaire (de 0,5 à 1,4 dg/min selon les exemples).

On connait également des films extrudés à partir de polyéthylène radicalaire et dont l'épaisseur est généralement au moins égale à 20 »m.

De manière surprenante on a trouvé avantageux, selon la présente invention, de préparer des compositions comprenant de 25 à 95 % en poids d'au moins un polymère radicalaire d'éthylène d'indice de fluidité compris entre 0,15 et 3 dg/min et de 5 à 75 % en poids d'au moins un copolymère d'éthylène et d'α-oléfines comprenant au moins 4 atomes de carbone, de densité comprise entre 0,905 et 0,940 et d'indice de fluidité compris entre 0,4 et 3 dg/min. En effet les compositions selon l'invention permettent, dans plusieurs applications d'améliorer certaines propriétés d'usage par rapport à chaque constituant pris séparément, tout en évitant les contraintes et limitations de l'art antérieur. Par exemple il ne sera pas nécessaire que le copolymère éthylène/α-oléfine de la composition ait un indice de polydispersité compris entre 2,7 et 4,1, ni un taux d'insaturations global compris entre 0,1 et 0,3 double liaison pour 1000 atomes de carbone. De même le copolymère éthylène/α-oléfine de la composition n'aura pas nécessairement comme dans FR-A-2.481.709, un indice de fluidité inférieur à 0,3 dg/min (un tel indice étant généralement difficile à obtenir selon la plupart des procédés de copolymérisation connus).

Un premier objet de la présente invention consiste donc en une composition comprenant:
- de 25 à 95% en poids d'au moins un polymère radicalaire d'éthylène ayant un indice de fluidité compris entre 0,15 et 3 dg/min ; et
- de 5 à 75% en poids d'au moins un copolymère d'éthylène et d'α-oléfines comprenant au moins 4 atomes de carbone,
- de densité comprise entre 0,905 et 0,940 ;
- d'indice de fluidité compris entre 0,4 et 3 dg/min,
- la teneur moyenne en motifs α-oléfines dans le copolymère étant comprise entre 1 et 8% en moles ;
- ledit copolymère comprenant des fractions cristallines et des fractions amorphes,
- la distribution des motifs α-oléfines dans le copolymère étant hétérogène ;
- la teneur en motifs α-oléfines dans le copolymère variant entre au moins 0,2 et au plus 5 fois leur teneur moyenne selon les fractions considérées ;
- les fractions cristallines du copolymère présentant un pic unique de fusion compris entre 118°C et 130°C et représentant de 20 à 50% en poids du copolymère total,
- le copolymère étant obtenu par copolymérisation de l'éthylène et de la ou des alpha-oléfines dans au moins un réacteur comportant au moins une zone, à une température comprise entre 180° et 320°C et sous une pression comprise entre 300 et 2500 bars, au moyen d'un système catalytique de type Ziegler comprenant, d'une part, un activateur choisi parmi les hydrures et les composés organométalliques des métaux des groupes I à III de la Classification Périodique et, d'autre part, au moins un composé halogéné de métal de transition, avec les conditions que, d'une part, le flux gazeux alimentant le réacteur soit constitué, en régime stationnaire, de 10 à 80% en poids d'éthylène, et de 20 à 90% en poids d'α-oléfines, et, d'autre part, le système catalytique présente une réactivité vis-à-vis de l'éthylène de 5 à 15 fois supérieure à sa réactivité vis-à-vis des α-oléfines.

Par polymère radicalaire d'éthylène au sens de la présente invention on entend un produit obtenu par polymérisation sous haute pression (généralement 1000 à 4000 bars) et à haute température (140° à 350°C), en présence d'un initiateur de radicaux libres (tel que l'oxygène, les peroxydes ou les peresters), de l'éthylène et éventuellement de faibles quantités d'au moins un monomère copolymérisable avec l'éthylène tel que par exemple l'oxyde de carbone, les acides carboxyliques éthyléniquement insaturés, les esters dérivés desdits acides et d'un alcool ayant de 1 à 8 atomes de carbone, l'anhydride maléique, l'acétate de vinyle, etc... Dans le cadre de la présente invention on choisit de préférence un polymère radicalaire d'éthylène ayant une densité comprise entre 0,91 et 0,94.

Le copolymère d'éthylène et d'α-oléfines, de structure particulière, décrit dans EP-A-0 070 220, peut aussi être subsidiairement caractérisé en ce que son taux d'insaturation global est compris être 0,25 et 0,50 double liaison pour 1000 atomes de carbone, de préférence entre 0,32 et 0,45 double liaison pour 1000 atomes de carbone. Dans la suite de la description, le terme copolymère sera employé pour désigner à la fois des polymères binaires comportant une α-oléfine en sus de l'éthylène et des polymères ternaires comportant deux α-oléfines en sus de l'éthylène. Ces copolymères utilisables selon la présente invention peuvent être subsidiairement caractérisés par une masse moléculaire moyenne comprise entre 15.000 et 60.000 et/ou un indice de polydispersité compris entre 3 et 9 pour les polymères binaires, 4 à 12 pour les polymères ternaires. Dans la définition précédente il faut entendre, de manière conventionnelle dans la technique des polymères, la masse moléculaire moyenne comme étant la masse moléculaire moyenne en nombre Mn et l'indice de polydispersité comme étant le rapport Mw/Mn de la masse moléculaire moyenne en poids à la masse moléculaire moyenne en nombre. D'autre part les α-oléfines pouvant entrer dans la constitution des copolymères hétérogènes selon l'invention sont par exemple le butène-1, l'hexène-1, le méthyl-4-pentène-1, l'octène-1. Lorsque deux α-oléfines sont simultanément présentes dans le copolymère selon l'invention (cas d'un terpolymère) leur teneur moyenne totale est, comme décrit précédemment, comprise entre 1 et 8 % en moles et en outre le rapport de leurs teneurs moyennes respectives est de préférence compris entre 0,25 et 4. Ainsi par exemple un terpolymère éthylène/butène-1/hexène-1 selon l'invention comprenant en moyenne 95 % en moles de motifs éthylène pourra comprendre en moyenne de 1 à 4 % en moles de motifs butène-1 et en moyenne de 4 à 1 % en moles de motifs hexène-1.

Il est tout à fait remarquable de noter que des compositions selon l'invention comprenant un copolymère éthylène/α-oléfine hétérogène tel que décrit ci-dessus ne sont pas la simple juxtaposition de macromolécules de structures différentes mais qu'il se produit une cocristallsation de ces macromolécules à une température distincte de la température de cristallisation de chacune d'elles. Ainsi les compositions selon l'invention peuvent être caractérisées par le fait que leur diagramme d'analyse enthalpique différentielle présente, outre les pics de cristallisation de chaque constituant, un pic de cocristallisation situé entre les deux pics de cristallisation. La température exacte de cocristallisation dépend bien évidemment de la teneur moyenne en motifs α-oléfine dans le copolymère et de la proportion en poids dudit copolymère dans la composition.

Selon l'application envisagée, on choisira de manière plus précise l'indice de fluidité du polymère radicalaire d'éthylène. Ainsi pour le gainage de câbles téléphoniques on choisira un indice compris entre 0,15 et 0,45 dg/min. Selon l'application envisagée on choisira également la proportion de polymère radicalaire d'éthylène permettant d'atteindre les meilleures propriétés d'usage.

Pour certaines applications on trouvera même avantageux d'ajouter, aux compositions précédemment décrites, un troisième constituant polymère. Pour la fabrication de housses rétractables on pourra par exemple ajouter jusqu'à 15 % en poids, par rapport à la somme du polymère radicalaire et du copolymère éthylène/α-oléfine, de polyéthylène haute densité. On entend par là un homopolymère ou copolymère d'éthylène de densité comprise entre 0,95 et 0,97, généralement obtenu par catalyse Ziegler. Pour le gainage de câbles téléphoniques on pourra par exemple ajouter jusqu'à 10 % en poids, par rapport à la somme du polymère radicalaire et du copolymère éthylène/α-oléfine, d'un copolymère éthylène-acétate de vinyle à forte teneur (par exemple 20 à 40 % en poids) en acétate et d'indice de fluidité compris entre 3 et 20 dg/min.

Les différents types de polymères entrant comme constituants dans les compositions selon l'invention sont très facilement miscibles pour former des mélanges homogènes. Les compositions selon l'invention peuvent donc être préparées sans difficultés par l'une quelconque des techniques de mélange des polymères, notamment le mélange des granulés à l'état solide à température ambiante et le mélange à l'état fondu sous l'effet de la chaleur.

Les compositions selon l'invention permettent la fabrication, par extrusion, de films d'épaisseur comprise entre 8 et 200 »m, dont certaines propriétés sont améliorées par rapport aux films constitués à partir de chaque polymère du mélange. Ces films se distinguent notamment par leur résistance à l'impact, la résistance à chaud des soudures, le trouble optique et les propriétés dynamométriques (résistance et allongement à la rupture, traction-choc). Cependant, contrairement à l'enseignement du US-A-3.176.052 cité précédemment, la brillance optique des films selon l'invention n'est pas supérieure, mais inférieure, à celle de films obtenus à partir de chaque polymère du mélange. Cette situation est d'ailleurs sans inconvénient puisque, fort heureusement, la brillance des copolymères éthylène/α-oléfine de structure hétérogène utilisés selon la présente invention est très supérieure à celle des copolymères décrits dans US-A-3.176.052. Les films obtenus à partir des compositions selon l'invention trouvent de nombreux usages dans l'industrie de l'emballage.

Les compositions selon l'invention permettent également la fabrication de housses rétractables d'épaisseur généralement comprise entre 25 et 150 »m par extrusion-soufflage selon un taux de gonflage compris entre 1,5 et 5. Les housses rétractables ainsi obtenues présentent avantageusement des forces de rétraction à chaud plus faibles et des forces de cohésion à froid plus élevées que des housses rétractables fabriquées à partir de polyéthylène radicalaire seul.

### EXEMPLES 1 à 4

On transforme en films par extrusion-soufflage, des compositions comprenant :
(A) un copolymère éthylène/butène-1 d'indice de fluidité (mesuré selon la norme ASTM D 1238-73) égal à 0,8 dg/min, de masse volumique (mesurée selon la norme NF T 51-063) égale à 0,919 g/cm3, de masse moléculaire moyenne en nombre (mesurée par chromatographie de perméation de gel) égale à 43.000, d'indice de polydispersité Mw/Mn égal à 3,6, ayant une teneur molaire moyenne en motifs butène-1 égale à 3,2 %, un taux d'insaturation global de 0,39 double liaison pour 1000 atomes de carbone, un point de fusion de la fraction cristalline (déterminé par analyse enthalpique différentielle) égal à 122°C et dont l'hétérogénéité de la distribution du butène-1 (déterminée par un test de fractionnement du copolymère) s'exprime par le multiple (2,2 fois) et le sous-multiple (0,5 fois) de la teneur moyenne entre lesquels varie la teneur en motifs butène-1 selon les fractions considérées. Ce copolymère est obtenu conformément à l'exemple 5 de la demande de brevet européen EP-A-0 070 220.
(B) un homopolymère de l'éthylène, obtenu en présence d'un initiateur de radicaux libres, de masse volumique 0,921 g/cm3 et d'indice de fluidité 1,1 dg/min.

Les conditions de transformation sont les suivantes :
température de la composition : 200°C
vitesse de rotation de la vis d'extrusion : 80 tours/min.
taux de gonflage : 3,0.

Dans le tableau I figurent, outre la proportion en poids du copolymère (A) dans la composition, les résultats des mesures, sur des films d'épaisseur 50 microns, des propriétés suivantes :
- résistance à la rupture dans le sens longitudinal RRL (exprimée en daN/cm² et allongement à la rupture dans le sens transversal ART (exprimé en %) déterminés selon la norme ASTM D 882-67,
- résistance à chaud des soudures RCS (exprimée en g/mm), déterminée selon la norme TAPPI T 683 SU 72,
- brillance optique B (exprimée en %), déterminée selon la norme ASTM D 2457.

Dans le même tableau figure également, pour chaque composition, la limite d'étirabilité industrielle (EI), exprimée en microns, c'est-à-dire l'épaisseur la plus faible qui permette de maintenir une fabrication continue sans rupture de la gaine de film pendant une durée de 2 heures.

**TABLEAU I**

| Exemple | (A) % | RRL | ART | RCS | EI | B |
|---|---|---|---|---|---|---|
| 1 | 0 | 150 | 415 | 1,5 | 30 | 90 |
| 2 | 10 | 170 | 475 | 2,0 | 27 | 82 |
| 3 | 50 | 205 | 640 | 7,5 | 16 | 92 |
| 4 | 100 | 210 | 710 | 15,5 | 8 | 99 |

Des compositions analogues à celles décrites ci-dessus mais comprenant respectivement 65 à 75 % du copolymère (A) ont des résistances à chaud des soudures égales respectivement à 13 et 22,5 g/mm.

Comme on le comprend aisément, les exemples 1 et 4 sont comparatifs. On remarque notamment que les propriétés dynamométriques des compositions selon l'invention sont, de façon inattendue, supérieures à la moyenne arithmétique des propriétés de chacune des polymères purs qu'elles comprennent. Il en va de même pour la résistance à chaud des soudures lorsque la proportion du copolymère (A) est comprise entre 60 et 75 % en poids. L'étirabilité industrielle des compositions selon l'invention est, de façon avantageuse et inattendue, inférieure à la moyenne arithmétique de l'étirabilité industrielle de chacun des polymères purs qu'elles comprennent. Il est aussi remarquable de noter que l'analyse enthalpique différentielle du film de l'exemple 3, refroidi de 200°C à 100°C en 4 secondes, révèle, outre des épaulements à 108°C et 122°C correspondant à la cristallisation de chaque constituant du mélange, un pic de cocristallisation caractéristique à 114°C.

### EXEMPLES 5 à 8

On transforme en films, par extrusion-soufflage, des compositions comprenant :
(A) le copolymère hétérogène utilisé dans les exemples précédents, et
(C) un homopolymère de l'éthylène, obtenu en présence d'un initiateur de radicaux libres, de masse volumique 0,923 g/cm3 et d'indice de fluidité 0,3 dg/min.

Les conditions de transformation sont les mêmes que précédemment, à l'exception de la température de la compositions (205°C).

Dans le tableau II figurent outre la proportion en poids du copolymère (A) dans la composition et l'étirabilité industrielle EI, les résultats des mesures sur des films d'épaisseur 50 »m, des mêmes propriétés que précédemment. L'exemple 5 est comparatif.

**TABLEAU II**

| Exemple | (A) % | RRL | ART | RCS | EI | B |
|---|---|---|---|---|---|---|
| 5 | 0 | 180 | 300 | 2 | 90 | 47 |
| 6 | 10 | 190 | 400 | 7 | 77 | 48 |
| 7 | 40 | 210 | 560 | 25,5 | 47 | 55 |
| 8 | 75 | 210 | 655 | 17,5 | 20 | 79 |

### EXEMPLES 9 à 12

On transforme en films, par extrusion-soufflage, des compositions comprenant :
(A) le copolymère hétérogène utilisé dans les exemples précédents, et
(D) un homopolymère de l'éthylène, obtenu en présence d'un initiateur de radicaux libres, de masse volumique 0,924 g/cm3 et d'indice de fluidité 2 dg/min.

Les températures de transformation sont les mêmes que précédemment, à l'exception de la température de la composition (170°C).

Dans le tableau III figurent, outre la proportion en poids du copolymère (A) dans la composition et l'étirabilité industrielle EI, les résultats des mesures, sur des films d' épaisseur 50 »m, des propriétés suivantes :
- résistance à chaud des soudures RCS, exprimée en g/mm et déterminée selon la norme TAPPI T 683 SU 72
- trouble optique T, exprimé en % et déterminé selon la norme ASTM D-1003
- résistance à l'impect RI, exprimée en g/»m et déterminée selon la norme ASTM D 1709-67.

A titre de comparaison, il est précisé que le copolymère (A) pur présente un trouble T de 10,5 % et une résistance à l'impact égale à 3,0 g/»m. L'exemple 9 est comparatif.

**TABLEAU III**

| Exemple | (A) % | RCS | T | RI | EI |
|---|---|---|---|---|---|
| 9 | 0 | 2,5 | 6,0 | 1,9 | 20 |
| 10 | 10 | 3,5 | 6,2 | 2,1 | 18 |
| 11 | 40 | 9,5 | 6,5 | 2,6 | 13 |
| 12 | 75 | 15 | 6,7 | 2,9 | 9 |

### EXEMPLES 13 à 15

On transforme en films, par extrusion-soufflage, des compositions comprenant :
(A) un copolymère éthylène/butène-1 hétérogène, analogue à celui utilisé dans les exemples précédents à l'exception de son indice de fluidité (égal à 0,9 dg/min) et de sa masse volumique (égale à 0,924 g/cm3), et
(E) un homopolymère de l'éthylène, obtenu en présence d'un initiateur de radicaux libres, de masse volumique 0,922 g/cm3 et d'indice de fluidité 0,7 dg/min.

Les conditions de transformation sont les suivantes :
- température : 250°C
- vitesse de rotation de la vis d' extrusion : 60 t/min
- taux de gonflage : 3,0.

Afin de déterminer la capacité de ces films à former des housses rétractables de qualité convenable, on mesure sur des films d'épaisseur 120 »m :
- la force de rétraction à chaud dans le sens transversal FRT, exprimée en N/dm²,
- la force de cohésion à froid dans le sens longitudinal FCL, exprimée en daN/cm².

Dans le tableau IV figurent les résultats de ces mesures ainsi que la proportion en poids du copolymère (A). L'exemple 13 est comparatif. On rappelle que, pour la formation de housses rétractables, on recherche des films ayant la force de rétraction à chaud la plus faible possible et la force de cohésion à froid la plus élevée possible.

**TABLEAU IV**

| Exemple | (A) % | FRT | FCL |
|---|---|---|---|
| 13 | 0 | 113 | 12,0 |
| 14 | 20 | 71 | 19,0 |
| 15 | 40 | 87 | 19,4 |

### EXEMPLES 16 (comparatif) et 17

On transforme par la technique d'extrusion de tuyaux à une température de 230°C, en vue du gainage de câbles de télécommunications, des compositions de polymères d'éthylène comprenant 2,5 % en poids de noir de carbone. La composition de l'exemple 16 comprend 92, 5 % en poids de polyéthylène radicalaire d'indice de fluidité 0,3 dg/min et 5 % en poids d'un copolymère éthylène/acétate de vinyle d'une teneur de 28 % en poids en acétate. La composition de l'exemple 17 comprend 68,8 % en poids du même polyéthylène radicalaire, 7 % en poids du même copolymère éthylène/acétate de vinyle et 21,7 % en poids d'un copolymère éthylène/butène-1 hétérogène analogue à ceux utilisés dans les exemples précédents à l'exception de son indice de fluidité (égal à 2,5 dg/min), de sa masse volumique (égale à 0,919 g/cm3) et de son indice de polydispersité (égal à 7).

Sur les tuyaux ainsi extrudés, on mesure les propriétés suivantes :
- allongement à la rupture AR, exprimé en % et déterminé immédiatement après extrusion conformément à la norme NF T 51-034,
- allongement à la rupture après vieillissement ARV, exprimé en % et déterminé après vieillissement thermique à une température de 100°C pendant 240 heures, selon la norme NF T 51-034,
- résistance à la fissuration RF, exprimée en heures et déterminée selon la norme NF T 51-170.

Les résultats de ces mesures sont rassemblés dans le tableau V.

**TABLEAU V**

| Exemple | AR | ARV | RF |
|---|---|---|---|
| 16 | 275 | 100 | 45 |
| 17 | 520 | 495 | > 240 |

Il est remarquable de noter d'une part la stabilité au vieillissement des propriétés dynamométriques (allongement à la rupture) et d'autre part l'amélioration considérable de la résistance à la fissuration par rapport à la composition antérieurement connue. La composition de l'exemple 17 satisfait à la norme française CM 24 du Centre National d'Etudes des Télécommunications et à la norme allemande FTZ 72 TV1 de la Bundespost.

## Revendications

1. Composition comprenant :
- de 25 à 95% en poids d'au moins un polymère radicalaire d'éthylène ayant un indice de fluidité compris entre 0,15 et 3 dg/min ; et
- de 5 à 75% en poids d'au moins un copolymère d'éthylène et d'α-oléfines comprenant au moins 4 atomes de carbone,
- de densité comprise entre 0,905 et 0,940 ;
- d'indice de fluidité compris entre 0,4 et 3 dg/min,
- la teneur moyenne en motifs α-oléfines dans le copolymère étant comprise entre 1 et 8% en moles ;
- ledit copolymère comprenant des fractions cristallines et des fractions amorphes,
- la distribution des motifs α-oléfines dans le copolymère étant hétérogène ;
- la teneur en motifs α-oléfines dans le copolymère variant entre au moins 0,2 et au plus 5 fois leur teneur moyenne selon les fractions considérées ;
- les fractions cristallines du copolymère présentant un pic unique de fusion compris entre 118°C et 130°C et représentant de 20 à 50% en poids du copolymère total,
- le copolymère étant obtenu par copolymérisation de l'éthylène et de la ou des alpha-oléfines dans au moins un réacteur comportant au moins une zone, à une température comprise entre 180° et 320°C et sous une pression comprise entre 300 et 2500 bars, au moyen d'un système catalytique de type Ziegler comprenant, d'une part, un activateur choisi parmi les hydrures et les composés organométalliques des métaux des groupes I à III de la Classification Périodique et, d'autre part, au moins un composé halogéné de métal de transition, avec les conditions que, d'une part, le flux gazeux alimentant le réacteur soit constitué, en régime stationnaire, de 10 à 80% en poids d'éthylène, et de 20 à 90% en poids d'α-oléfines, et, d'autre part, le système catalytique présente une réactivité vis-à-vis de l'éthylène de 5 à 15 fois supérieure à sa réactivité vis à vis des α-oléfines.

2. Composition selon la revendication 1, caractérisée en ce que le copolymère d'éthylène et d'α-oléfines a une masse moléculaire comprise entre 15 000 et 60 000.

3. Composition selon l'une des revendications 1 et 2, caractérisée en ce que le copolymère comporte une seule α-oléfine et en ce que son indice de polydispersité est compris entre 3 et 9.

4. Composition selon l'une des revendications 1 et 2, caractérisée en ce que le copolymère comporte deux α-oléfines dont le rapport des teneurs moyennes respectives est compris entre 0,25 et 4.

5. Composition selon la revendication 4, caractérisée en ce que l'indice de polydispersité du copolymère est compris entre 4 et 12.

6. Composition selon l'une des revendications 1 à 5, caractérisée en ce que les α-oléfines sont choisies parmi le butène-1, l'hexène-1, le méthyl-4 pentène-1 et l'octène-1.

7. Composition selon l'une des revendications 1 à 6, caracterisée en ce que le taux d'insaturation global du copolymère est compris entre 0,25 et 0,50 double liaison pour 1000 atomes de carbone.

8. Composition selon la revendication 7, caractérisée en ce que le taux d'insaturation global du copolymère est compris entre 0,32 et 0,45 double liaison pour 1000 atomes de carbone.

9. Composition selon l'une des revendications 1 à 8, caractérisée en ce que le polymère radicalaire d'éthylène a un indice de fluidité compris entre 0,15 et 0,45 dg/min.

10. Composition selon l'une des revendications 1 à 9, caractérisée en ce qu'elle comprend en outre jusqu'à 15% en poids, par rapport à la somme du polymère radicalaire et du copolymère éthylène/α-oléfines, de polyéthylène haute densité.

11. Composition selon la revendication 9, caractérisée en ce qu'elle comprend en outre jusqu'à 10% en poids, par rapport à la somme du polymère radicalaire et du copolymère éthylène/α-oléfines, d'un copolymère éthylène-acétate de vinyle d'indice de fluidité compris entre 3 et 20 dg/min et comprenant de 20 à 40% en poids d'acétate.

12. Application d'une composition selon l'une des revendications 1 à 11, choisie parmi la fabrication de films d'épaisseur comprise entre 8 et 200 »m, la fabrication de housses rétractables d'épaisseur comprise entre 25 et 150 »m et la fabrication de tuyaux pour gainage de câbles de télécommunications.

## Claims

1. Composition comprising:
- from 25 to 95% by weight of at least one free-radical ethylene polymer having a melt index between 0.15 and 3 dg/min; and
- from 5 to 75% by weight of at least one copolymer of ethylene and α-olefins containing at least 4 carbon atoms,
- having a specific gravity between 0.905 and 0.940,
- having a melt index between 0.4 and 3 dg/min,
- the average proportion of α-olefin units in the copolymer being between 1 and 8% by mole,
- said copolymer comprising crystalline fractions and amorphous fractions,
- the distribution of α-olefin units in the copolymer being heterogeneous,
- the proportion of α-olefin units in the copolymer varying between at least 0.2 and at most 5 times their average proportion, depending on the considered fractions;
- the crystalline fractions of the copolymer having a single melting peak between 118° and 130°C and representing from 20 to 50% by weight of the total copolymer,
- the copolymer being obtained by copolymerization of ethylene and α-olefin(s) in at least one reactor comprising at least one zone, at a temperature between 180° and 320°C and at a pressure between 300 and 2500 bars, by means of a Ziegler type catalyst system comprising, on one hand, an activator selected from the hydrides and the organometallic compounds of the metals of groups I to III of the periodic table and, on the other hand, at least one halogenated compound of a transition metal, on condition that, on one hand, the gas flow feeding the reactor consists, in the stationary state, of 10 to 80% by weight of ethylene and of 20 to 90% by weight of α-olefins and, on the other hand, the catalyst system has a reactivity towards ethylene 5 to 15 higher than its reactivity towards α-olefins.

2. Composition according to claim 1, characterized in that the ethylene/α-olefins copolymer has a molecular weight between 15000 and 60000.

3. Composition according to one of claims 1 and 2, characterized in that the copolymer comprises a single α-olefin and has a polydispersity index between 3 and 9.

4. Composition according to one of claims 1 and 2, characterized in that the copolymer comprises two α-olefins, in a ratio of respective average proportions between 0.25 and 4.

5. Composition according to claim 4, characterized in that the polydispersity index of the copolymer is between 4 and 12.

6. Composition according to one of claims 1 to 5, characterized in that the α-olefins are selected from but-1-ene, hex-1-ene, 4-methylpent-1-ene and oct-1-ene.

7. Composition according to one of claims 1 to 6, characterized in that the total unsaturation ratio of the copolymer is between 0.25 and 0.50 double bond per 1000 carbon atoms.

8. Composition according to claim 7, characterized in that the total unsaturation ratio of the copolymer is between 0.32 and 0.45 double bond per 1000 carbon atoms.

9. Composition according to one of claims 1 to 8, characterized in that the free-radical ethylene polymer has a melt index between 0.15 and 0.45 dg/min.

10. Composition according to one of claims 1 to 9, characterized in that it further comprises up to 15% by weight of high density polyethylene, with respect to the sum of free-radical polymer and ethylene/α-olefins copolymer.

11. Composition according to claim 9, characterized in that it further comprises up to 10% by weight, with respect to the sum of the free-radical polymer and ethylene/α-olefins copolymer, of an ethylene/vinylacetate copolymer having a melt index between 3 and 20 dg/min and comprising 20 to 40% by weight acetate.

12. Application of a composition according to one of claims 1 to 11, selected from the manufacture of films having a thickness between 8 and 200 »m, the manufacture of retractable housings having a thickness between 25 and 150 »m and the manufacture of tubes for sheating telecommunication cables.

## Patentansprüche

1. Zusammensetzung enthaltend:
- 25 bis 95 Gew.-% mindestens eines Äthylen-Radikalpolymers mit einem Fließindex zwischen 0,15 und 3 dg/min und
- 5 bis 75 Gew.-% mindestens eines Copolymers von Äthylen und α-Olefinen mit mindestens 4 Kohlenstoffatomen,
- mit einer Dichte zwischen 0,905 und 0,940,
- mit einem Fließindex zwischen 0,4 und 3 dg/min, wobei
- der mittlere Gehalt des Copolymers an α-Olefin-Einheiten zwischen 1 und 8 Mol-% beträgt,
- das Copolymer kristalline Fraktionen und amorphe Fraktionen enthält,
- die Verteilung der α-Olefln-Einheiten in dem Copolymer heterogen ist,
- der Gehalt des Copolymers an α-Olefin-Einheiten zwischen mindestens dem 0,2fachen und höchstens dem 5fachen ihres mittleren Gehalts je nach den betrachteten Fraktionen variiert,
- die kristallinen Fraktionen des Copolymers einen einzigen Schmelzpunkt zwischen 118° und 130°C aufweisen und 20 bis 50 Gew.-% des gesamten Copolymers ausmachen,
- das Copolymer durch Copolymerisation des Äthylens und des oder der α-Olefine in mindestens einem wenigstens eine Zone aufweisenden Reaktor bei einer Temperatur zwischen 180° und 320°C und unter einem Druck zwischen 300 und 2500 bar mit Hilfe eines Katalysatorsystems des Typs Ziegler, das einerseits einen Aktivator, ausgewählt aus den Hydriden und den organometallischen Verbindungen von Metallen der Gruppen I bis III des Periodensystems, und anderseits mindestens eine Halogenverbindung eines Übergangsmetalls enthält, unter den Bedingungen, daß einerseits der den Reaktor speisende Gasstrom stationär von 10 bis 80 Gew.-% Äthylen und 20 bis 90 Gew.-% α-Olefinen gebildet wird und daß anderseits das Katalysatorsystem eine Reaktivität gegenüber Äthylen aufweist, die 5 bis 15 mal größer ist als seine Reaktivität gegenüber α-Olefinen, hergestellt wird.

2. Zusammensetzung nach Anspruch 1, dadurch gekennzeichnet, daß das Copolymer von Äthylen und α-Olefinen eine Molekularmasse zwischen 15.000 und 60.000 besitzt.

3. Zusammensetzung nach Anspruch 1 oder 2, dadurch gekennzeichnet, daß das Copolymer ein einziges α-Olefin enthält und daß seine Polydispersitätszahl zwischen 3 und 9 beträgt.

4. Zusammensetzung nach Anspruch 1 oder 2, dadurch gekennzeichnet, daß das Copolymer zwei α-Olefinen enthält, wobei das Verhältnis der betreffenden mittleren Gehalte zwischen 0,25 und 4 beträgt.

5. Zusammensetzung nach Anspruch 4, dadurch gekennzeichnet, daß die Polydispersitätszahl des Copolymers zwischen 4 und 12 beträgt.

6. Zusammensetzung nach einem der Ansprüche 1 bis 5, dadurch gekennzeichnet, daß die α-Olefine ausgewählt sind aus der Gruppe bestehend aus Buten-1, Hexen-1, Methyl-4-penten-1 und Octen-1.

7. Zusammensetzung nach einem der Ansprüche 1 bis 6, dadurch gekennzeichnet, daß der Gesamt-Ungesättigtheitsgrad des Copolymers zwischen 0,25 und 0,50 Doppelbindungen auf 1.000 Kohlenstoffatome beträgt.

8. Zusammensetzung nach Anspruch 7, dadurch gekennzeichnet, daß der Gesamt-Ungesättigtheitsgrad des Copolymers zwischen 0,32 und 0,45 Doppelbindungen auf 1.000 Kohlenstoffatome beträgt.

9. Zusammensetzung nach einem der Ansprüche 1 bis 8, dadurch gekennzeichnet, daß das Äthy-len-Radikalpolymer einen Fließindex zwischen 0,15 und 0,45 dg/min besitzt.

10. Zusammensetzung nach einem der Ansprüche 1 bis 9, dadurch gekennzeichnet, daß sie weiters bis zu 15 Gew.-% Polyäthylen hoher Dichte, bezogen auf die Summe aus dem Radikalpolymer und dem Copolymer von Äthylen und α-Olefinen, enthält.

11. Zusammensetzung nach Anspruch 9, dadurch gekennzeichnet, daß sie weiters bis zu 10 Gew.-% bezogen auf die Summe aus dem Radikalpolymer und dem Copolymer von Äthylen und α-Olefinen, eines Äthylen/Vinylacetat-Copolymers mit einem Fließindex zwischen 3 und 20 dg/min und mit 20 bis 40 Gew.-% Acetat enthält.

12. Anwendung einer Zusammensetzung nach einem der Ansprüche 1 bis 11 für die Herstellung von Folien einer Dicke zwischen 8 und 200 »m, die Herstellung von Schrumpfhüllen einer Dicke zwischen 25 und 150 »m oder die Herstellung von Schläuchen für das Umhüllen von Fernmeldekabeln.
